(19) Europäisches Patentamt
European Patent Office
Office européen des brevets

(11) **EP 4 775 545 A1**

(12) **EUROPEAN PATENT APPLICATION**

(43) Date of publication:
**15.07.2026 Bulletin 2026/29**

(21) Application number: **25227325.5**

(22) Date of filing: **28.12.2025**

(51) International Patent Classification (IPC):
**C01G 53/50** $^{(2025.01)}$ **C01G 53/504** $^{(2025.01)}$
**H01M 4/505** $^{(2010.01)}$ **H01M 4/525** $^{(2010.01)}$
**H01M 10/0525** $^{(2010.01)}$

(52) Cooperative Patent Classification (CPC):
**C01G 53/504; C01G 53/50; H01M 4/505;**
**H01M 4/525; H01M 10/0525;** C01P 2002/54;
C01P 2002/74; C01P 2006/40

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **26.12.2024 KR 20240197012**

(71) Applicant: **SK On Co., Ltd.**
**Seoul 03161 (KR)**

(72) Inventors:
• **JO, Hyun Tak**
**34124 Daejeon (KR)**
• **NOH, Mi Jung**
**34124 Daejeon (KR)**
• **PARK, Jeong Eun**
**34124 Daejeon (KR)**

(74) Representative: **Stolmár & Partner**
**Patentanwälte PartG mbB**
**Blumenstraße 17**
**80331 München (DE)**

(54) **CATHODE ACTIVE MATERIAL FOR LITHIUM SECONDARY BATTERY AND LITHIUM SECONDARY BATTERY INCLUDING THE SAME**

(57) A cathode active material for a secondary battery includes a plurality of a lithium metal oxide particle. A molar ratio of manganese based on total moles of all metal elements excluding lithium in the lithium metal oxide particle is in a range from 0.15 to 0.3, and a molar ratio of cobalt based on total moles of all metal elements excluding lithium in the lithium metal oxide particle is 0.05 or less. An R-factor of the lithium metal oxide particle is in a range from 0.45 to 0.57.

FIG. 1

EP 4 775 545 A1

**Description**

TECHNICAL FIELD

The present disclosure relates to a cathode active material for a secondary battery and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as a hybrid vehicle.

Examples of the secondary battery include a lithium secondary battery, a sodium secondary battery, a potassium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

For example, the lithium secondary battery may include an electrode assembly including a cathode, an anode, and a separation layer (separator), and an electrolyte impregnating the electrode assembly. The lithium secondary battery may further include an outer packaging material, e.g., a pouch-shaped packaging material, that accommodates the electrode assembly and the electrolyte.

SUMMARY

According to an aspect of the present disclosure, there is provided a cathode active material for a secondary battery having improved electrochemical properties.

According to an aspect of the present disclosure, there is provided a lithium secondary battery including the cathode active material for a secondary battery.

According to embodiments of the present disclosure, a cathode active material for a secondary battery includes a plurality of a lithium metal oxide particle. A molar ratio of manganese based on total moles of all metal elements excluding lithium in the lithium metal oxide particle is in a range from 0.15 to 0.3, and a molar ratio of cobalt based on total moles of all metal elements excluding lithium in the lithium metal oxide particle is 0.05 or less. An R-factor defined by Equation 1 of the lithium metal oxide particle is in a range from 0.45 to 0.57.

$$[\text{Equation 1}]$$

$$\text{R-factor} = \{I(006)+I(102)\}/I(101)$$

In Equation 1, I(006) is a peak intensity of a (006) plane of the lithium metal oxide particle measured by an X-ray diffraction (XRD) analysis, I(102) is a peak intensity of a (102) plane of the lithium metal oxide particle measured by the XRD analysis, and I(101) is a peak intensity of a (101) plane of the lithium metal oxide particle measured by the XRD analysis.

In some embodiments, the R-factor of the lithium metal oxide particle may be in a range from 0.48 to 0.53.

In some embodiments, the molar ratio of cobalt based on total moles of all metal elements excluding lithium in the lithium metal oxide particle may be 0.03 or less.

In some embodiments, the lithium metal oxide particle may be devoid of cobalt.

In some embodiments, the molar ratio of manganese based on total moles of all metal elements excluding lithium in the lithium metal oxide particle may be in a range from 0.15 to 0.24.

In some embodiments, the lithium metal oxide particle may further contain nickel, and a molar of nickel based on total moles of all metal elements excluding lithium in the lithium metal oxide particle may be 0.7 or greater.

In some embodiments, a crystallite size of the lithium metal oxide particle measured by an XRD analysis may be in a range from 300 nm to 700 nm.

In some embodiments, a crystallite size of the lithium metal oxide particle measured by an XRD analysis may be in a range from 400 nm to 600 nm.

In some embodiments, the lithium metal oxide particle may have a hexagonal crystal structure.

In some embodiments, the lithium metal oxide particle may be doped or coated with at least one element selected from the group consisting of B, W, Al, Sr, Ti, Y, Co, Zr, Mg, Mo, Nb, Ta, Cr, V, Sb, Sn, Ga and Sc.

In some embodiments, a cation mixing ratio of the lithium metal oxide particle may be in a range from 2% to 5%.

In some embodiments, a cation mixing ratio of the lithium metal oxide particle may be in a range from 3% to 4.5%.

In some embodiments, the lithium metal oxide particle may have a single particle form.

According to embodiments of the present disclosure, a lithium secondary battery includes a cathode including the above-described cathode active material for a lithium secondary battery, and an anode opposing the cathode.

A cathode active material for a lithium secondary battery according to embodiments of the present disclosure may include lithium metal oxide particles having enhanced crystallinity and structural stability. Accordingly, charge/-discharge properties and life-span of the lithium secondary battery including the cathode active material may be improved.

The lithium metal oxide particles according to embodiments of the present disclosure may include manganese and may contain a small amount of cobalt among total transition metals, or may not contain cobalt. Thus, the cathode active material having improved structural stability and charge/discharge properties may be provided at low cost.

The cathode active material for a lithium secondary battery and the lithium secondary battery according to embodiments of the present disclosure may be widely applied in green technology fields such as an electric vehicle, a battery charging station, a solar power generation, a wind power generation, etc., using a battery, etc. The cathode active material for a lithium secondary battery and the lithium secondary battery according to embodiments of the present disclosure may be used for eco-friendly electric vehicles, hybrid vehicles, or the like, to prevent a climate change by suppressing air pollution and greenhouse gas emissions. etc.

BRIEF DESCRIPTION OF THE DRAWINGS

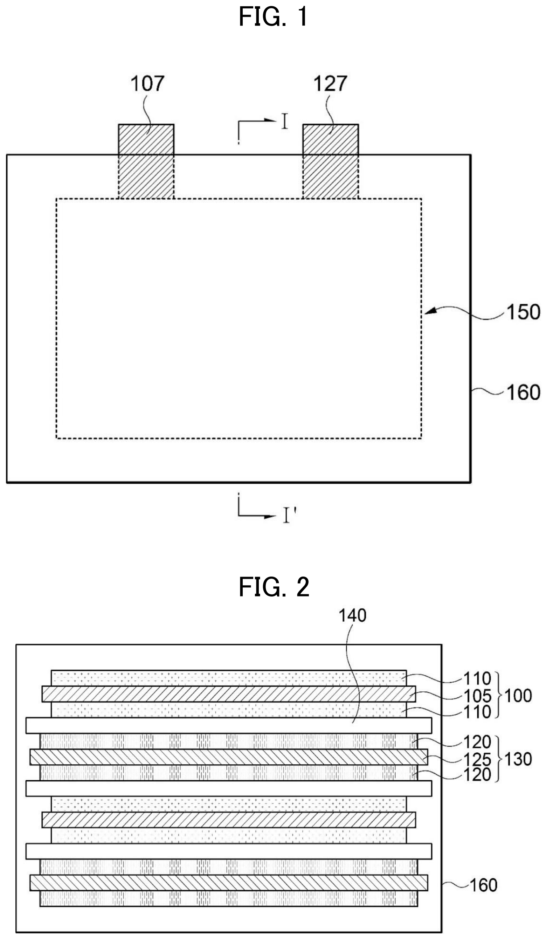

FIGS. 1 and 2 are a schematic plan view and a cross-sectional view, respectively, illustrating a lithium secondary battery in accordance with example embodiments.

DETAILED DESCRIPTION OF THE EMBODIMENTS

Embodiments of the present disclosure provide a cathode active material for a lithium secondary battery is provided.

Embodiments of the present disclosure provide a lithium secondary battery including the cathode active material for a lithium secondary battery is provided.

According to exemplary embodiments, the cathode active material for a lithium secondary battery (hereinafter, that may be abbreviated as "cathode active material") includes lithium metal oxide particles.

For example, the lithium metal oxide particles may be provided as a compound capable of reversibly intercalating/de-intercalating lithium ions.

In example embodiments, the lithium metal oxide particle may contain lithium and a metal element other than lithium. For example, the lithium metal oxide particle may contain lithium, nickel, cobalt and/or manganese.

The lithium metal oxide particle may include a lithium-nickel metal oxide. For example, the lithium metal oxide particle may contain lithium, nickel and manganese. In some embodiments, the lithium metal oxide particle may include a nickel-manganese-based lithium oxide or a nickel-cobalt-manganese (NCM)-based lithium oxide.

For example, nickel (Ni) may be provided as a metal associated with a power and a capacity of a lithium secondary battery.

For example, a conductivity or a resistance of the lithium secondary battery may be improved by cobalt (Co), mechanical and electrical stability of the lithium secondary battery may be improved by manganese (Mn).

In example embodiments, a molar ratio of manganese contained in the lithium metal oxide particle among total moles of all metal elements excluding lithium may be in a range from 0.15 to 0.3.

For example, if the molar ratio of manganese is less than 0.15 based on the total moles of all metal elements excluding lithium, structural stability of the lithium metal oxide particle may be deteriorated. For example, if the molar ratio of manganese exceeds 0.3 based on the total moles of all metal elements excluding lithium, contents of nickel and cobalt in the lithium metal oxide particles may be decreased to deteriorate capacity/power properties. In the above manganese molar ratio range, structural stability of the lithium metal oxide particle may be sufficiently achieved while further improving charge/discharge properties.

For example, the molar ratio of manganese based on the total moles of all metal elements excluding lithium, the contents of nickel and cobalt in the lithium metal oxide particle may be in a range from 0.15 to 0.24, or greater than 0.15 and 0.24 or less. In the above range, structural stability of the cathode active material may be enhanced, and life-span properties of the cathode or the lithium secondary battery may be enhanced during repeated charge/discharge cycles.

In example embodiments, a molar ratio of cobalt contained in the lithium metal oxide particle based on the total moles of all metal elements excluding lithium may be 0.05 or less.

For example, if the molar ratio of cobalt exceeds 0.05 based on the total moles of all metal elements excluding lithium, the content of cobalt may be increased excessively to increase a production cost of the cathode active material. For example, the molar ratio of cobalt based on the total moles of all metal elements excluding lithium may be 0.04 or less, 0.03 or less, 0.02 or less, or 0.01 or less. In the above range, the production cost of the cathode active material (e.g., a low-cobalt cathode active material) may be reduced by reducing the content of cobalt having a relatively high price.

In some embodiments, the lithium metal oxide particle may be substantially devoid of cobalt.

In some embodiments, a molar ratio of nickel contained in the lithium metal oxide particle based on the total moles of all metal elements excluding lithium may be 0.7 or greater, or 0.75 or greater. In the molar ratio range of nickel, the lithium secondary battery having high capacity and high power properties may be provided.

For example, as the nickel content increases, mechanical stability of the cathode including the cathode active material may be deteriorated. In example embodiments, the lithium metal oxide particle may include a predetermined amount range of manganese to have improved mechanical stability and life-span properties.

In some embodiments, the lithium metal oxide particle may include a crystal structure represented by Chemical Formula 1.

[Chemical Formula 1]          $Li_xNi_aCo_bMn_cM_dO_y$

In Chemical Formula 1, M may include at least one of Na, Mg, Ca, Ba, La, Y, Ti, Zr, Hf, V, Nb, Ta, Cr, Mo, W, Fe, Cu, Ag, Zn, B, Al, Ga, C, Si, Sn or Sr. In Chemical Formula 1, $0.9 \leq x \leq 1.1$, $1.9 \leq y \leq 2.1$, $0.7 \leq a \leq 1$, $0 \leq b \leq 0.05$, $0.15 \leq c \leq 0.3$, and $0 \leq d \leq 0.15$. In the above ranges, the power, capacity and life-span properties, and mechanical stability of the lithium secondary battery may be improved.

The chemical structure represented by Chemical Formula 1 represents a bonding relationship included in the crystal structure of the cathode active material or the lithium metal oxide particle, and does not exclude another additional element. For example, nickel, cobalt and/or manganese may be provided as main active elements of the cathode active material. Chemical formula 1 is provided to express the bonding relationship of the main active elements, and is to be understood to encompass introduction and substitution of the additional element.

In an embodiment, the auxiliary element may be further included in addition to the main active elements to enhance chemical stability of the cathode active material or the crystal structure. The auxiliary element may be incorporated into the crystal structure to form a bond, and this case is to be understood as being included in the crystal structure represented by Chemical Formula 1.

The auxiliary element may include, e.g., at least one of Na, Mg, Ca, Ba, La, Y, Ti, Zr, Hf, V, Nb, Ta, Cr, Mo, W, Fe, Cu, Ag, Zn, B, Al, Ga, C, Si, Sn or Sr. The auxiliary element may serve as an auxiliary active element such as Al which may contribute to capacity and power activity of the cathode active material together with Co and Mn.

The cathode active material may include a doping element or coating element. For example, elements substantially the same as or similar to the aforementioned auxiliary elements may be used as the doping element. For example, the aforementioned auxiliary elements may be used alone or in a combination of two or more therefrom.

The doping element or the coating element may be present on a surface of the lithium metal oxide particle, or may penetrate through the surface of the lithium metal oxide particle, and be incorporated into the bonding structure represented by Chemical Formula 1.

In some embodiments, the lithium metal oxide particle may be doped or coated with at least one element selected from the group consisting of B, W, Al, Sr, Ti, Y, Co, Zr, Mg, Mo, Nb, Ta, Cr, V, Sb, Sn, Ga and Sc.

In example embodiments, the lithium metal oxide particle may have a hexagonal crystal structure. Accordingly, a crystallinity of the lithium metal oxide particle may be increased, and structural stability during repeated charge and discharge cycles may be enhanced.

In example embodiments, an R-factor of the lithium metal oxide particles defined by Equation 1 is in a range from 0.45 to 0.57.

$$[\text{Equation 1}]$$

$$\text{R-factor} = \{I(006)+I(102)\}/I(101)$$

In Equation 1, I(006) represents a peak intensity of a (006) plane of the lithium metal oxide particle measured by an X-ray diffraction (XRD) analysis, I(102) represents a peak intensity of a (102) plane of the lithium metal oxide particle measured by the XRD analysis, and I(101) represent a peak intensity of a (101) plane of the lithium metal oxide particle measured by the XRD analysis.

For example, the R-factor may represent a proportion of the hexagonal crystal structure within a crystal structure of the lithium metal oxide particle. For example, a decrease in the R-factor may indicate a well-developed hexagonal crystal structure within the lithium metal oxide particle.

For example, the R-factor may be obtained by performing the X-ray diffraction analysis with respect to the lithium metal oxide particle. For example, Cu may be used and an X-ray may be accelerated under conditions of a voltage of 45 kV and a current of 40 mA. 2θ (θ: diffraction angle) may be set to a range of 10° to 120° and a scan may be performed in a reflection mode to measure the peak intensities of the (006) plane, the (101) plane, and the (102) plane of the lithium metal oxide particle. The measured peak intensities may be introduced into Equation 1 to obtain the R-factor of the lithium metal oxide particle.

For example, if the R-factor of the lithium metal oxide particles is less than 0.45, the hexagonal crystal structure within the particle may be increased to degrade structural stability of a low-cobalt cathode active material, and charge/discharge properties may also be degraded.

For example, in the case of the aforementioned low-cobalt cathode active material, contents of other transition metals such as nickel and manganese in the lithium metal oxide particle may be relatively increased. For example, if a content of $Ni^{2+}$ or $Mn^{4+}$ which possess magnetic properties in the crystal structure of the lithium metal oxide particle relatively increases, stability of the hexagonal crystal structure may be lowered. Accordingly, changes in volume and crystal structure during charge/discharge may be increased to cause an excessive increase in resistance.

For example, if the R-factor of the lithium metal oxide particle exceeds 0.57, the hexagonal crystal structure in the particle may be excessively decreased to degrade structural stability. Accordingly, decreased capacity and increased resistance during repeated charge/discharge cycles may be caused.

In some embodiments, the R-factor of the lithium metal oxide particle may be in a range from 0.450 to 0.570, from 0.460 to 0.560, from 0.470 to 0.550, or from 0.480 to 0.530. In the above range, stability of the crystal structure in the particle may be increased to suppress capacity degradation and resistance increase during repeated charge and discharge.

For example, the above-described lithium metal oxide particle may be prepared by wetmixing or dry-mixing a nickel-cobalt-manganese precursor (e.g., nickel-cobalt-manganese hydroxide) with a lithium precursor (e.g., lithium hydroxide or lithium carbonate), reacting the mixture, and then calcining the product.

In some embodiments, a crystallite size of the lithium metal oxide particle measured by an XRD analysis may be in a range from 300 nm to 700 nm, or from 400 nm to 600 nm. In the above range, deterioration of durability and crack generation in the cathode active material due to an excessively small particle size may be prevented.

In example embodiments, the "crystallite size" is a numerical value measured by the XRD analysis. The crystallite may be calculated by a Scherrer equation represented by Equation 2.

$$[\text{Equation 2}]$$

$$\text{L} = \frac{0.9\lambda}{\beta cos\theta}$$

In Equation 2, L is the crystallite size (nm), λ is an X-ray wavelength (nm), β is a full width at half maximum (FWHM) of a (003) plane, and θ is a diffraction angle (rad).

In some embodiments, in Equation 2, β may be a FWHM correcting a value derived from a device. In an embodiment, Si may be used as a standard material for reflecting the device-derived value. In this case, a FWHM profile of Si over an entire 2θ range may be fitted, and the device-derived FWHM may be expressed as a function of 2θ. Thereafter, a value obtained by subtracting and correcting the FWHM value derived from the device in the corresponding 2θ obtained from the function may be used as β.

In some embodiments, the lithium metal oxide particle may have a single particle form. The term "single particle form" herein may be used to exclude, e.g., a secondary particle formed by agglomeration or aggregation of multiple primary particles. For example, the lithium metal oxide particles may substantially consist of the single particle form, and the secondary particle structure formed by agglomeration or aggregation of the primary particles (e.g., more than 10, 20 or more, 30 or more, 40 or more, 50 or more of the primary particles, etc.) may be excluded.

For example, the term "single particle form" does not exclude a structure where 2 to 10 single particles are attached or adhered to each other to form a single or monolithic body.

In an embodiment, the lithium metal oxide particle may include a structure in which multiple primary particles are merged together and converted into a substantially single particle form.

For example, the lithium metal oxide particles may have a granular or spherical single particle form.

In some embodiments, a cation mixing ratio of the lithium metal oxide particle may range from 2% to 5%, from 2.5% to 5%, or from 3% to 4.5%. The cation mixing ratio may be defined as a nickel occupancy of lithium sites of a lithium-nickel-based metal oxide particle as measured by an X-ray diffraction (XRD) analysis. In the above range, changes in the crystal structure during repeated charge/discharge cycles may be reduced, and improved cycle life-span properties may be provided.

In some embodiments, an XRD analysis may be performed on the lithium metal oxide particles to obtain an XRD analysis data. A Rietveld refinement may be performed on the obtained XRD analysis data to obtain the nickel occupancy of the lithium sites (octahedral, 3b site). The cation mixing ratio (%) may be obtained by multiplying the nickel occupancy by 100. The Rietveld analysis may be performed using, e.g., data from a standard crystal structure model of a layered lithium-nickel-manganese-cobalt oxide structure as "98-016-9367" data from the Inorganic Crystal Structure Database (ICSD).

For example, the lithium metal oxide particle may be prepared by a method known in the related art. For example, the lithium metal oxide particle may be prepared by reacting a transition metal precursor with a lithium source material. The transition metal precursor (e.g., a Ni-Co-Mn precursor) may be prepared by a co-precipitation reaction.

For example, the transition metal precursor may be prepared by reacting metal salts. The metal salts may include a nickel salt, a manganese salt and a cobalt salt.

Examples of the nickel salt include nickel sulfate, nickel hydroxide, nickel nitrate, nickel acetate, a hydrate thereof, etc. Examples of the manganese salt include manganese sulfate, manganese acetate, a hydrate thereof, etc. Examples of the cobalt salt include cobalt sulfate, cobalt nitrate, cobalt carbonate, a hydrate thereof, etc.

The metal salts may be mixed with a precipitant and/or chelating agent in a ratio that may satisfy the content or concentration ratio of each metal described with reference to Chemical Formula 1 to prepare an aqueous solution. The aqueous solution may be coprecipitated in a reactor to prepare the transition metal precursor.

The precipitant may include an alkaline compound such as sodium hydroxide (NaOH) or sodium carbonate ($Na_2CO_3$). The chelating agent may include, e.g., ammonia water, ammonium carbonate, or the like.

A temperature of the co-precipitation reaction may be adjusted in, e.g., a range from about 40°C to 60°C. A reaction time may be controlled in a range from about 24 to 72 hours.

The lithium source material may include, e.g., a lithium-containing carbonate (e.g., lithium carbonate), a lithium-containing hydrate (e.g., lithium hydroxide hydrate ($LiOH \cdot H_2O$)), a lithium-containing hydroxide (e.g., lithium hydroxide), a lithium-containing nitrate (e.g., lithium nitrate ($LiNO_3$)), a lithium-containing chloride (e.g., lithium chloride (LiCl)), etc. These may be used alone or in a combination of two or more therefrom.

In some embodiments, a mixture including the transition metal precursor and the lithium source material may be prepared, and then calcined to form the the lithium metal oxide particles. The mixture may further include a source material including a doping metal element or an auxiliary metal element.

In some embodiments, the calcination may be performed at a temperature from 800 °C to 1200 °C, e.g., from 900 °C to 1100 °C for 3 to 50 hours, e.g., 10 to 20 hours.

For example, the R-factor may be controlled by the calcination temperature, the calcination time, a heating rate, etc., when preparing the lithium metal oxide particles. For example, the lithium metal oxide particles prepared using the above-described method may have the R-factor in a range from 0.45 to 0.57.

FIGS. 1 and 2 are a schematic plan view and a schematic cross-sectional view, respectively, illustrating a lithium secondary batteries according to example embodiments.

Referring to FIGS. 1 and 2, the lithium secondary battery includes a cathode 100 and an anode 130 including the cathode active material described above.

The lithium secondary battery may include a separator 140 interposed between the cathode 100 and the anode 130.

The cathode 100 may include a cathode current collector 105 and a cathode active material layer 110 formed by coating the cathode active material on the cathode current collector 105.

A cathode slurry may be coated on the cathode current collector 105, and then dried and pressed to form cathode. The cathode slurry may be prepared by mixing and stirring the cathode active material with a binder, a conductive material and/or a dispersant in a solvent.

The cathode current collector 105 may include, e.g., stainless steel, nickel, aluminum, titanium, copper, or an alloy thereof, and may preferably include aluminum or an aluminum alloy.

The binder may include, e.g., an organic binder such as vinylidene fluoridehexafluoropropylene copolymer (PVDF-co-HFP), polyvinylidene fluoride (PVDF), polyacrylonitrile, polymethylmethacrylate, etc., or an aqueous binder such as styrene-butadiene rubber (SBR) that may be used together with a thickener such as carboxymethyl cellulose (CMC).

For example, a PVDF-based binder may be used as a binder for forming the cathode. In this case, an amount of the binder required for forming the cathode active material layer may be reduced, thereby improving the power and capacity of the secondary battery.

The conductive material may be included to promote the electron transfer between active material particles. For example, the conductive material may include a carbon-based conductive material such as graphite, carbon black, graphene, carbon nanotube, etc., and/or a metal-based conductive material, e.g., as tin, tin oxide, titanium oxide, a perovskite material such as $LaSrCoO_3$ and $LaSrMnO_3$, or the like.

In example embodiments, the anode 130 may include an anode current collector 125 and an anode active material layer 120 formed by coating an anode active material on the anode current collector 125.

The anode active material may include a material known in the related art capable of absorbing and desorbing lithium ions without any particular limitation. For example, a carbon-based material such as a crystalline carbon, an amorphous carbon, a carbon composite, a carbon fiber, etc.; a lithium alloy; silicon, tin, or the like, may be used.

Examples of the amorphous carbon include hard carbon, coke, a mesocarbon microbead (MCMB) fired at 1,500°C or less, a mesophase pitch-based carbon fiber (MPCF), or the like. Examples of the crystalline carbon include a graphite-based carbon such as natural graphite, a graphitized coke, a graphitized MCMB, a graphitized MPCF, or the like. Examples of an element included in the lithium alloy include aluminum, zinc, bismuth, cadmium, antimony, silicon, lead, tin, gallium, indium, or the like.

The anode current collector 125 may include gold, stainless steel, nickel, aluminum, titanium, copper, or an alloy thereof, and may preferably include copper or a copper alloy.

In some embodiments, a slurry may be prepared by mixing and stirring the anode active material above with a binder, a conductive material and/or a dispersant in a solvent. The slurry may be coated on the anode current collector 125, and then dried and pressed to prepare the anode 130.

Materials substantially the same as or similar to the above-described materials may be used as the binder and the conductive material. In some embodiments, the binder for forming the anode may include an aqueous binder such as styrene-butadiene rubber (SBR) for compatibility with the carbon-based active material, and may be used together with a thickener such as carboxymethyl cellulose (CMC).

The separator 140 may be interposed between the cathode 100 and the anode 130. The separator 140 may include a porous polymer formed of a polyolefin-based polymer such as an ethylene homopolymer, a propylene homopolymer, an ethylene/butene copolymer, an ethylene/hexene copolymer, an ethylene/methacrylate copolymer, or the like. The separator may include a nonwoven fabric formed of a glass fiber having a high melting point, a polyethylene terephthalate fiber, or the like.

In some embodiments, an area (e.g., a contact area with the separator 140) and/or a volume of the anode 130 may be larger than that of the cathode 100. Accordingly, lithium ions generated from the cathode 100 may be easily transferred to the anode 130 without being precipitated or sedimented. Thus, both improvement of both power and stability from the above-describe cathode active material may be more easily implemented.

In example embodiments, an electrode cell may be defined by the cathode 100, the anode 130 and the separator 140, and a plurality of the electrode cells may be stacked to form an electrode assembly 150 in the form of, e.g., a jelly roll. For example, the electrode assembly 150 may be formed by winding, stacking, folding, or the like, of the separator.

The electrode assembly 150 may be accommodated together with an electrolyte solution in a case 160 to define a lithium secondary battery. In example embodiments, a non-aqueous electrolyte solution may be used as the electrolyte solution.

The non-aqueous electrolyte solution may include a lithium salt as the electrolyte and an organic solvent. For example, the lithium salt may be expressed as $Li^+X^-$, and examples of an anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

An electrode tab may be formed from each of the cathode current collector 105 and the anode current collector 125 to extend to one side of the case 160. The electrode tabs may be fused together with the one side of the case 160 to be connected to an electrode lead (a cathode lead 107 and an anode lead 127) which are extended or exposed to an outside of the case 160.

For example, the lithium secondary battery may be manufactured in a cylindrical type using a can, a prismatic type, a pouch type, or a coin type.

The invention relates also to the following numbered aspects:

Aspect 1. A cathode active material for a secondary battery comprising a plurality of a lithium metal oxide particle, wherein a molar ratio of manganese based on total moles of all metal elements excluding lithium in the lithium metal oxide particle is in a range from 0.15 to 0.3, and a molar ratio of cobalt based on total moles of all metal elements excluding lithium in the lithium metal oxide particle is 0.05 or less, an R-factor defined by Equation 1 of the lithium metal oxide particle is in a range from 0.45 to 0.57: [00113]

[Equation 1]

$$R\text{-factor} = \{I(006)+I(102)\}/I(101)$$

wherein, in Equation 1, I(006) is a peak intensity of a (006) plane of the lithium metal oxide particle measured by an X-ray diffraction (XRD) analysis, I(102) is a peak intensity of a (102) plane of the lithium metal oxide particle measured by the XRD analysis, and I(101) is a peak intensity of a (101) plane of the lithium metal oxide particle measured by the XRD analysis.

Aspect 2. The cathode active material for a lithium secondary battery of aspect 1, wherein the R-factor of the lithium metal oxide particle is in a range from 0.48 to 0.53.

Aspect 3. The cathode active material for a lithium secondary battery of aspect 1 or 2, wherein the molar ratio of cobalt based on total moles of all metal elements excluding lithium in the lithium metal oxide particle is 0.03 or less.

Aspect 4. The cathode active material for a lithium secondary battery of any one of aspects 1 to 3, wherein the lithium metal oxide particle is devoid of cobalt.

Aspect 5. The cathode active material for a lithium secondary battery of any one of aspects 1 to 4, wherein the molar ratio of manganese based on total moles of all metal elements excluding lithium in the lithium metal oxide particle is in a range from 0.15 to 0.24.

Aspect 6. The cathode active material for a lithium secondary battery of any one of aspects 1 to 5, wherein the lithium metal oxide particle further contains nickel, and a molar of nickel based on total moles of all metal elements excluding lithium in the lithium metal oxide particle is 0.7 or greater.

Aspect 7. The cathode active material for a lithium secondary battery any one of aspects 1 to 6, wherein a crystallite size of the lithium metal oxide particle measured by an XRD analysis is in a range from 300 nm to 700 nm.

Aspect 8. The cathode active material for a lithium secondary battery of any one of aspects 1 to 7, wherein a crystallite size of the lithium metal oxide particle measured by an XRD analysis is in a range from 400 nm to 600 nm.

Aspect 9. The cathode active material for a lithium secondary battery of any one of aspects 1 to 8, wherein the lithium metal oxide particle has a hexagonal crystal structure.

Aspect 10. The cathode active material for a lithium secondary battery any one of aspects 1 to 9, wherein the lithium metal oxide particle is doped or coated with at least one element selected from the group consisting of B, W, Al, Sr, Ti, Y, Co, Zr, Mg, Mo, Nb, Ta, Cr, V, Sb, Sn, Ga and Sc.

Aspect 11. The cathode active material for a lithium secondary battery of any one of aspects 1 to 10, wherein a cation mixing ratio of the lithium metal oxide particle is in a range from 2% to 5%.

Aspect 12. The cathode active material for a lithium secondary battery of any one of aspects 1 to 11, wherein a cation mixing ratio of the lithium metal oxide particle is in a range from 3% to 4.5%.

Aspect 13. The cathode active material for a lithium secondary battery of any one of aspects 1 to 12, wherein the lithium metal oxide particle has a single particle form.

Aspect 14. A lithium secondary battery, comprising:
a cathode comprising the cathode active material for a lithium secondary battery of any one of aspects 1 to 13; and an anode opposing the cathode.

Examples and Comparative Examples

Example 1

$NiSO_4$, $CoSO_4$ and $MnSO_4$ were mixed in a molar ratio of 0.75:0.05:0.20, respectively, using distilled water bubbled with $N_2$ for 24 hours to remove dissolved oxygen. The solution was placed in a reactor at 50 °C, and a co-precipitation reaction was conducted for 48 hours using NaOH and $NH_3H_2O$ as a precipitant and a chelating agents, respectively, to obtain $Ni_{0.75}Co_{0.05}Mn_{0.20}(OH)_2$ as a transition metal precursor. The precursor was dried at 80 °C for 12 hours, and then re-dried at 110°C for 12 hours.

Lithium hydroxide and the transition metal precursor were added to a dry high-speed mixer at a molar ratio of 1.01:1 and uniformly mixed for 5 minutes.

The mixture was placed in a kiln, heated at a rate of 2 °C/min, and maintained at about 860 °C for 10 hours. Oxygen was continuously passed through the reactor at a flow rate of 20 L/min during the heating and temperature maintaining. After the calcination, natural cooling to room temperature proceeded, and pulverization and classification were performed to obtain $LiNi_{0.75}Co_{0.05}Mn_{0.20}O_2$ as lithium metal oxide particles.

Examples 2 to 9 and Comparative Examples 1 to 10

Cathode active materials for a lithium secondary battery were manufactured using the same method as that in Example 1, except that the contents of Ni, Co and Mn and the calcination temperature were adjusted as shown in Table 2.

(2) Evaluation on cathode active material properties

XRD Analysis - Measurement of R-factor, crystallite size (nm) and cation mixing ratio (%)

Peak intensities of I(006), I(101) and I(102) of the lithium metal oxide particles in the cathode active materials of Examples and Comparative Examples were measured using an X-ray diffraction (XRD) analyzer. Each R-factor of the cathode active materials according to Examples and Comparative Examples was obtained by introducing the peak intensities into Equation 1.

Each crystallite size (nm) of the cathode active materials according to Examples and Comparative Examples was obtained using Equation 2.

The cathode active materials according to Examples and Comparative Examples were sampled in an XRD sample holder, and a nickel occupancy of lithium sites (octahedral, 3b site) was obtained through a Rietveld analysis using an XRD analysis data. The cation mixing ratio was obtained by multiplying the nickel occupancy by 100. The Rietveld analysis was performed using 98-016-9367 data from Inorganic Crystal Structure Database (ICSD).

The results are shown in Table 2, and the XRD analysis equipment/conditions are shown in Table 1 below.

[Table 1]

| XRD(X-Rav Diffractometer) EMPYREAN | |
|---|---|
| Maker | PANaltical |
| Anode material | Cu |
| K-Alpha 1 wavelength | 1.540598 Å |
| Generator voltage | 45 kV |
| Tube current | 40 mA |
| Scan range | 10° - 120° |
| Scan step size | 0.0065° |
| Divergence slit | 1/4° |
| Antiscatter slit | 1° |

[Table 2]

| | calcination temperature (°C) | Ni/Co/Mn molar ratio (mol%) | R-factor | cation mixing ratio (%) | crystallite size (nm) |
|---|---|---|---|---|---|
| Example 1 | 860 | 75/5/20 | 0.450 | 3.26 | 471 |
| Example 2 | 885 | 75/5/20 | 0.483 | 3.49 | 537 |
| Example 3 | 910 | 75/5/20 | 0.558 | 3.91 | 639 |
| Example 4 | 860 | 75/2/23 | 0.458 | 3.82 | 457 |
| Example 5 | 885 | 75/2/23 | 0.490 | 4.02 | 575 |
| Example 6 | 910 | 75/2/23 | 0.531 | 4.25 | 624 |
| Example 7 | 860 | 75/0/25 | 0.462 | 3.90 | 488 |
| Example 8 | 885 | 75/0/25 | 0.516 | 4.24 | 560 |
| Example 9 | 910 | 75/0/25 | 0.561 | 4.47 | 644 |
| Comparative Example 1 | 835 | 75/5/20 | 0.430 | 3.17 | 413 |
| Comparative Example 2 | 935 | 75/5/20 | 0.580 | 4.14 | 671 |
| Comparative Example 3 | 835 | 75/2/23 | 0.440 | 3.77 | 419 |
| Comparative Example 4 | 935 | 75/2/23 | 0.575 | 4.62 | 683 |
| Comparative Example 5 | 835 | 75/0/25 | 0.440 | 3.80 | 420 |
| Comparative Example 6 | 935 | 75/0/25 | 0.594 | 4.80 | 675 |
| Comparative Example 7 | 935 | 70/0/30 | 0.580 | 4.99 | 670 |
| Comparative Example 8 | 935 | 75/10/15 | 0.451 | 2.54 | 667 |

(continued)

|  | calcination temperature (°C) | Ni/Co/Mn molar ratio (mol%) | R-factor | cation mixing ratio (%) | crystallite size (nm) |
|---|---|---|---|---|---|
| Comparative Example 9 | 935 | 80/10/10 | 0.460 | 2.31 | 519 |
| Comparative Example 10 | 935 | 60/5/35 | 0.460 | 4.76 | 471 |

(3) Fabrication of lithium secondary battery

A secondary battery was fabricated using each cathode active material according to Examples and Comparative Examples. Specifically, a cathode slurry was prepared using the cathode active material, Denka Black as a conductive material, and PVDF as a binder in a mass ratio of 97:2:1. The cathode slurry was coated on an aluminum current collector, and then dried and pressed to prepare a cathode

An anode slurry containing 93 wt% of natural graphite as an anode active material, 5 wt% of KS6 (a flake-type conductive material), 1 wt% of styrene-butadiene rubber (SBR) as a binder, and 1 wt% carboxymethyl cellulose (CMC) as a thickener was coated on a copper substrate, dried, and pressed to prepare an anode.

The cathode and the anode were notched to proper sizes, and stacked with a separator (polyethylene, thickness: 12 μm) interposed therebetween to form a cell. Tab portions of the cathode and the anode were welded. The welded cathode/separator/cathode assembly was placed in a pouch and sealed at three sides so that a side with an electrode tab was included in the sealed sides.

An electrolyte solution was injected through an unsealed side, the injection side was also sealed, and then impregnation was performed for at least 12 hours. A 1M $LiPF_6$ solution using a mixed solvent of ethylene carbonate (EC)/ethyl methyl carbonate (EMC) (20/80; volume ratio) was used as the electrolyte solution.

Pre-charge was performed for 50 minutes at a current of 0.24C (5A). After about 12 hours, degassing was performed. Aging was performed for 24 hours or more, and then formation charge/discharge cycles (charge conditions: CC-CV 0.24C 4.35V 0.05C CUT-OFF cut-off; discharge conditions: CC 0.24C, 2.5V cut-off) were performed. The secondary battery was then further charged (charge conditions: CC-CV 0.24C, 4.35V, SOC 30% cut-off) for a product fabrication.

(4) Evaluation on performance of lithium secondary battery: Evaluation on high temperature life-span property

The lithium secondary batteries according to Examples and Comparative Examples were charged (CC/CV 1.0C, 4.35V, 0.05C cut-off) and discharged (CC 1.0C, 2.5V cut-off) 500 times in a 45°C chamber. A capacity retention (%) was evaluated as a percentage of a discharge capacity at the 500th cycle divided by a discharge capacity at the 1st cycle.

Before initiating the cycle and after the 500th cycle, the lithium secondary battery was charged to a DOD 50%, and then discharged at 1 C for 10 seconds. After 10 seconds, a voltage change (V) was measured to calculate a resistance (DCIR). A resistance increase ratio (%) was evaluated by dividing the resistance after the 500th cycle by a resistance after the 1st cycle and multiplying by 100.

The results are shown in Table 3.

[Table 3]

|  | high temperature life-span property | |
|---|---|---|
|  | capacity retention (%) | resistance increase ratio (%) |
| Example 1 | 94 | 139.1 |
| Example 2 | 95.2 | 117.2 |
| Example 3 | 94.5 | 135 |
| Example 4 | 92.9 | 146.2 |
| Example 5 | 95 | 121.1 |
| Example 6 | 94.7 | 119.4 |
| Example 7 | 92.6 | 148.5 |
| Example 8 | 94.7 | 131.3 |
| Example 9 | 93.5 | 141.6 |

(continued)

| | high temperature life-span property | |
| --- | --- | --- |
| | capacity retention (%) | resistance increase ratio (%) |
| Comparative Example 1 | 87.8 | 172.1 |
| Comparative Example 2 | 90.4 | 165 |
| Comparative Example 3 | 91.1 | 176.3 |
| Comparative Example 4 | 89.7 | 181.6 |
| Comparative Example 5 | 87.6 | 194.4 |
| Comparative Example 6 | 82.1 | 205.6 |
| Comparative Example 7 | 89.0 | 185.7 |
| Comparative Example 8 | 89.8 | 171.1 |
| Comparative Example 9 | 90.1 | 189.4 |
| Comparative Example 10 | 90.8 | 170.0 |

Referring to Tables 2 and 3 above, in Examples where a manganese molar ratio was adjusted in a range from 0.15 to 0.3 and a cobalt molar ratio was adjusted to 0.05 or less relative to the total moles of metals excluding lithium, and the R-factor was adjusted in a range from 0.45 to 0.57, the capacity retention was improved and the resistance increase ratio was decreased.

In Comparative Examples 9 and 10 where the manganese molar ratio was not within 0.15 to 0.3 relative to the total moles of metals excluding lithium, the crystal structure of the lithium metal oxide particle became unstable, resulting in a decrease in capacity retention.

In Comparative Examples 1 to 7 where the cobalt molar ratio was adjusted to 0.05 or less based on the total moles of metals excluding lithium, but the R-factor was not within 0.45 to 0.57, structural stability was excessively degraded compared to those in Examples, resulting in an excessive resistance increase ratio during repeated charge and discharge.

## Claims

1.  A cathode active material for a secondary battery comprising a plurality of a lithium metal oxide particle,

    wherein a molar ratio of manganese based on total moles of all metal elements excluding lithium in the lithium metal oxide particle is in a range from 0.15 to 0.3, and a molar ratio of cobalt based on total moles of all metal elements excluding lithium in the lithium metal oxide particle is 0.05 or less,
    an R-factor defined by Equation 1 of the lithium metal oxide particle is in a range from 0.45 to 0.57:

    [Equation 1]

    $$\text{R-factor} = \{I(006)+I(102)\}/I(101)$$

    wherein, in Equation 1, I(006) is a peak intensity of a (006) plane of the lithium metal oxide particle measured by an X-ray diffraction (XRD) analysis, I(102) is a peak intensity of a (102) plane of the lithium metal oxide particle measured by the XRD analysis, and I(101) is a peak intensity of a (101) plane of the lithium metal oxide particle measured by the XRD analysis.

2.  The cathode active material for a lithium secondary battery of claim 1, wherein the R-factor of the lithium metal oxide particle is in a range from 0.48 to 0.53.

3.  The cathode active material for a lithium secondary battery of claim 1 or 2, wherein the molar ratio of cobalt based on total moles of all metal elements excluding lithium in the lithium metal oxide particle is 0.03 or less.

4.  The cathode active material for a lithium secondary battery of any one of claims 1 to 3, wherein the lithium metal oxide particle is devoid of cobalt.

5. The cathode active material for a lithium secondary battery of any one of claims 1 to 4, wherein the molar ratio of manganese based on total moles of all metal elements excluding lithium in the lithium metal oxide particle is in a range from 0.15 to 0.24.

6. The cathode active material for a lithium secondary battery of any one of claims 1 to 5, wherein the lithium metal oxide particle further contains nickel, and a molar of nickel based on total moles of all metal elements excluding lithium in the lithium metal oxide particle is 0.7 or greater.

7. The cathode active material for a lithium secondary battery any one of claims 1 to 6, wherein a crystallite size of the lithium metal oxide particle measured by an XRD analysis is in a range from 300 nm to 700 nm.

8. The cathode active material for a lithium secondary battery of any one of claims 1 to 7, wherein a crystallite size of the lithium metal oxide particle measured by an XRD analysis is in a range from 400 nm to 600 nm.

9. The cathode active material for a lithium secondary battery of any one of claims 1 to 8, wherein the lithium metal oxide particle has a hexagonal crystal structure.

10. The cathode active material for a lithium secondary battery any one of claims 1 to 9, wherein the lithium metal oxide particle is doped or coated with at least one element selected from the group consisting of B, W, Al, Sr, Ti, Y, Co, Zr, Mg, Mo, Nb, Ta, Cr, V, Sb, Sn, Ga and Sc.

11. The cathode active material for a lithium secondary battery of any one of claims 1 to 10, wherein a cation mixing ratio of the lithium metal oxide particle is in a range from 2% to 5%.

12. The cathode active material for a lithium secondary battery of any one of claims 1 to 11, wherein a cation mixing ratio of the lithium metal oxide particle is in a range from 3% to 4.5%.

13. The cathode active material for a lithium secondary battery of any one of claims 1 to 12, wherein the lithium metal oxide particle has a single particle form.

14. A lithium secondary battery, comprising:

a cathode comprising the cathode active material for a lithium secondary battery of any one of claims 1 to 13; and an anode opposing the cathode.

## FIG. 1

## FIG. 2

| | Europäisches Patentamt<br>European Patent Office<br>Office européen des brevets | **EUROPEAN SEARCH REPORT** | **Application Number**<br>EP 25 22 7325 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 457 890 A (SHENZHEN BTR NANOMETER TECH CO LTD) 26 January 2024 (2024-01-26)<br>* the whole document *<br>-& EP 4 576 259 A1 (BTR NANO TECH CO LTD [CN]) 25 June 2025 (2025-06-25)<br>* paragraphs [0133], [0134]; example 1 *<br>----- | 1-14 | INV.<br>C01G53/50<br>C01G53/504<br>H01M4/505<br>H01M4/525<br>H01M10/0525 |
| X | CN 115 057 487 A (SVOLT ENERGY TECH CO LTD) 16 September 2022 (2022-09-16)<br>* the whole document *<br>----- | 1-14 | |
| X | EP 4 447 156 A1 (TIANJIN B&M SCIENCE AND TECH CO LTD [CN])<br>16 October 2024 (2024-10-16)<br>* paragraph [0081]; example 1 *<br>----- | 1-14 | |
| X | CN 117 457 868 A (HUADING GUOLIAN BATTERY MAT CO LTD) 26 January 2024 (2024-01-26)<br>* the whole document *<br>----- | 1-14 | |
| X | EP 3 998 659 A1 (SVOLT ENERGY TECH CO LTD [CN]) 18 May 2022 (2022-05-18)<br>* paragraph [0074]; example 4 *<br>----- | 1-14 | TECHNICAL FIELDS SEARCHED (IPC)<br><br>C01G<br>H01M |
| X | EP 4 024 519 A1 (SVOLT ENERGY TECH CO LTD [CN]) 6 July 2022 (2022-07-06)<br>* paragraph [0044]; example 1 *<br>----- | 1-14 | |
| X | CN 118 183 879 A (HEFEI GUOXUAN HIGH TECH POWER ENERGY CO LTD)<br>14 June 2024 (2024-06-14)<br>* the whole document *<br>----- | 1-14 | |

The present search report has been drawn up for all claims

| Place of search | Date of completion of the search | Examiner |
|---|---|---|
| Munich | 2 June 2026 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

EP 4 775 545 A1

**ANNEX TO THE EUROPEAN SEARCH REPORT
ON EUROPEAN PATENT APPLICATION NO.**

EP 25 22 7325

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2026

| Patent document cited in search report | | | Publication date | Patent family member(s) | | | Publication date |
|---|---|---|---|---|---|---|---|
| CN 117457890 | A | | 26-01-2024 | CN | 117457890 | A | 26-01-2024 |
| | | | | CN | 120604355 | A | 05-09-2025 |
| | | | | EP | 4576259 | A1 | 25-06-2025 |
| | | | | JP | 2026514541 | A | 11-05-2026 |
| | | | | KR | 20250044788 | A | 01-04-2025 |
| | | | | MA | 71202 | A1 | 31-12-2025 |
| | | | | US | 2025163611 | A1 | 22-05-2025 |
| | | | | WO | 2025077631 | A1 | 17-04-2025 |
| EP 4576259 | A1 | | 25-06-2025 | CN | 117457890 | A | 26-01-2024 |
| | | | | CN | 120604355 | A | 05-09-2025 |
| | | | | EP | 4576259 | A1 | 25-06-2025 |
| | | | | JP | 2026514541 | A | 11-05-2026 |
| | | | | KR | 20250044788 | A | 01-04-2025 |
| | | | | MA | 71202 | A1 | 31-12-2025 |
| | | | | US | 2025163611 | A1 | 22-05-2025 |
| | | | | WO | 2025077631 | A1 | 17-04-2025 |
| CN 115057487 | A | | 16-09-2022 | NONE | | | |
| EP 4447156 | A1 | | 16-10-2024 | CN | 116314673 | A | 23-06-2023 |
| | | | | EP | 4447156 | A1 | 16-10-2024 |
| | | | | PL | 4447156 | T3 | 25-05-2026 |
| | | | | WO | 2024178920 | A1 | 06-09-2024 |
| CN 117457868 | A | | 26-01-2024 | NONE | | | |
| EP 3998659 | A1 | | 18-05-2022 | CN | 111435744 | A | 21-07-2020 |
| | | | | EP | 3998659 | A1 | 18-05-2022 |
| | | | | JP | 7326588 | B2 | 15-08-2023 |
| | | | | JP | 2022546936 | A | 10-11-2022 |
| | | | | KR | 20210134658 | A | 10-11-2021 |
| | | | | US | 2022340446 | A1 | 27-10-2022 |
| | | | | WO | 2021143374 | A1 | 22-07-2021 |
| EP 4024519 | A1 | | 06-07-2022 | CN | 111653752 | A | 11-09-2020 |
| | | | | EP | 4024519 | A1 | 06-07-2022 |
| | | | | JP | 7324946 | B2 | 10-08-2023 |
| | | | | JP | 2023501071 | A | 18-01-2023 |
| | | | | KR | 20220116274 | A | 22-08-2022 |
| | | | | US | 2023335713 | A1 | 19-10-2023 |
| | | | | WO | 2021258662 | A1 | 30-12-2021 |
| CN 118183879 | A | | 14-06-2024 | NONE | | | |

EPO FORM P0459

For more details about this annex : see Official Journal of the European Patent Office, No. 12/82